# EUROPEAN PATENT APPLICATION

(11) **EP 0 581 557 A1**
(43) Date of publication of application: **02.02.1994**
(21) Application number: 93305883.6
(22) Date of filing: 26.07.1993
(51) Int. Cl.: H02P 7/282

(54) **Control circuit of dc-motor having multi-tap series field winding**

(30) Priority: 30.07.1992 GB 9216221
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present invention relates to a series (or compound) motor and control circuit for adjusting effective exciting turn ratio of series field winding according to rotational speed or load current, and Particularly to a switch device mounted between the power supply and multi-tap series field winding for switch action by virtue of accepting eccentric force or according to the signal of change in rotational speed or load current amount in order to change effective exciting turn ratio of series winding and further change the operating charactertistics of series motor under respective states.

## Description

### SUMMARY OF THE INVENTION

The present invention relates to a series (or compound) motor and control circuit for adjusting effective exciting turn ratio of series field winding according to rotational speed or load current, and particularly to a switch device mounted between the power supply and multi-tap series field winding for switch action by virtue of accepting eccentric force or according to the signal of change in rotational speed or load current amount in order to change effective exciting turn ratio of series winding and further change the operating charactertistics of series motor under respective states.

### BRIEF DESCRIPTION OF THE INVENTION

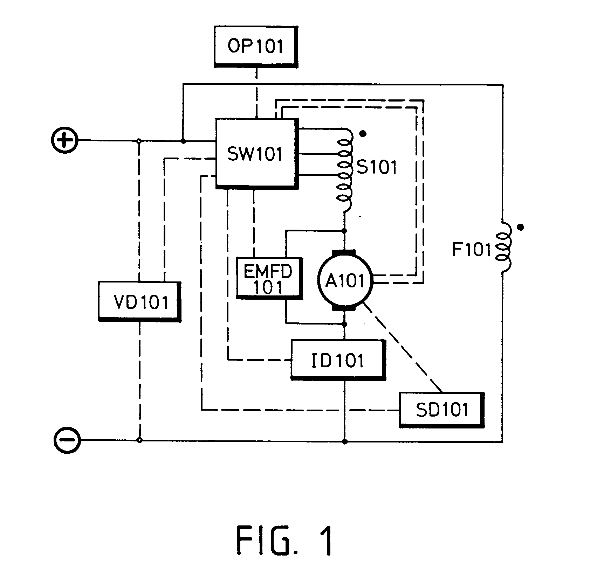

FIG. 1 is a diagram showing the closed-loop type primary circuit of series (or compound) motor and circuit for adjusting effective exciting turn ratio of series field winding according to rotational speed or load current.

### DETAILED DESCRIPTION OF THE INVENTION

The conventional series (or compound) motor, the turn ratio of its series field winding is adjusted subject to the difference of optimal rotational speed - high speed type series field winding should have lower turn ratio and low speed type should have higher turn ratio. Therefore, a critical value is often taken when the demand of speed ranges relatively wide; the present design is to overcome the said limit and disclose a series (or compound) motor and control circuit for adjusting effective exciting turn ratio of series field winding according to rotational speed or load current, and particularly to the greater load current the effective series winding is adjusted by the switch to satisfy the series (or compound) motor having lower saturated exciting turn ratio. More specifically, it relates to a switch device mounted between the power supply and multi-tap series field winding for switch action by virtue of accepting eccentric force or according to the signal of change in rotational speed or load current amount in order to change effective exciting turn ratio of series winding and further change the operating charactertistics of series motor under respective states.

FIG. 1 is a diagram showing the closed-loop type primary circuit of series (or compound) motor and circuit for adjusting effective exciting turn ratio of series field winding according to rotational speed or load current, which comprises:
at least one DC series motor consisted of multi-tap series field winding S101 and armature A101 or further a compound motor having shunt winding F101;
at least one selective and alternative switch device SW1 01 consisted of analogical or digital signal processing circuit and electro-mechanical or solid-state switch element, including a common pin leading to the power supply and each tap leading to the series field winding S101 for the control with eccentric force; or control by analogical or digital signal detector SD101 according to the change in motor rotational speed or control by analogical or digital type detector ID101 according to motor load current or control by armature EMF detector EMFD101 in order to enable the selective and alternative switch device SW101 to alternate the motor; when the load is lower and current smaller, effective exciting turn ratio of series field winding S101 becomes higher; on the contrary when the load is higher and current rising up, the selective and alternative switch device SW1 01 will switch to the low effective exciting turn ratio;
the circuit may further include power supply voltage detector VD1 01 for measuring voltage value of power supply in order to correct the control command of selective and alternative switch device and such correction value may include the higher voltage is the selective and alternative switch device inclines to increase turn ratio of effective exciting series field winding, and such inclination combines the said motor load current or rotational speed value to form a parameter for the selective and alternative switch device;
operating input device OP101 consisted of manual or out-connected signal interface for input relevant data to selective and alternative switch device.

The above-said circuit is consisted of closed-loop type primary circuit to employ motor load current or EMF as reference signal for control, and chiefly to disclose DC series (or compound) motor driven by single voltage or variable voltage power supply; and further including load current detector or motor rotational speed detector or armature EMF detector, or eccentric driving device in company with the known motor dynamic characteristics and with reference to the command of operating input device for relative operation selection by the selective and alternative switch device.

For practical application, the present series (or compound) motor and circuit for adjusting effective exciting turn ratio of series field winding according to rotational speed or load current may include some operating interface subject to the actual requirement, and its function including:
(1) Manual selective/alternative switch device to change effective exciting winding turn ratio of series field.
(2) Eccentric force selective/alternative switch device to change effective exciting winding turn ratio of series field.
(3) Motor rotational speed detector SD1 01 for operating the selective/alternative switch device to change effective exciting winding turn ratio of series field.
(4) Load current detector ID101 for operating the selective/ alternative switch device to change effective exciting winding turn ratio of series field.
(5) Armature EMF detector EMF101 for operating the selective /alternative switch device to change effective exciting winding turn ratio of series field.
(6) Power supply voltage detector for operating the selective/alternative switch device to change effective exciting winding turn ratio of series field.
(7) A combination of Item (1) and (2) for operating the selective/alternative switch device to change effective exciting winding turn ratio of series field.
(8) A combination of Item (1) and (4) for operating the selective/alternative switch device to change effective exciting winding turn ratio of series field.
(9) A combination of Item (1) and (5) for operating the selective/alternative switch device to change effective exciting winding turn ratio of series field.
(10) A combination of Item (1), (3), (6) for operating the selective/alternative switch device to change effective exciting winding turn ratio of series field.
(11) A combination of Item (1), (4), (6) for operating the selective/alternative switch device to change effective exciting winding turn ratio of series field.
(12) A combination of Item (1), (5), (6) for operating the selective/alternative switch device to change effective exciting winding turn ratio of series field.
(13) A combination of Item (1), (5), (6) for operating the selective/alternative switch device to change effective exciting winding turn ratio of series field.
(14) A combination of Item (4) and (6) for operating the selective/alternative switch device to change effective exciting winding turn ratio of series field.
(15) A combination of Item (5) and (6) for operating the selective/alternative switch device to change effective exciting winding turn ratio of series field.
(16) A combination of Item (1), (3), (4) for operating the selective/alternative switch device to change effective exciting winding turn ratio of series field.
(17) A combination of Item (1), (3), (5) for operating the selective/alternative switch device to change effective exciting winding turn ratio of series field.
(18) A combination of Item (1), (4), (5) for operating the selective/alternative switch device to change effective exciting winding turn ratio of series field.
(19) A combination of Item (3) and (4) for operating the selective/alternative switch device to change effective exciting winding turn ratio of series field.
(20) A combination of Item (3) and (5) for operating the selective/alternative switch device to change effective exciting winding turn ratio of series field.
(21) A combination of Item (4) and (5) for operating the selective/alternative switch device to change effective exciting winding turn ratio of series field.

The above-said various items of applications can be selected subject to such factors as horsepower and load in order to enrich the purpose of applications.

## Claims

1. A series (or compound) motor and control circuit for adjusting effective exciting turn ratio of series field winding according to rotational speed or load current, and particularly to a switch device mounted between the power supply and multi-tap series field winding for switch action by virtue of accepting eccentric force or according to the signal of change in rotational speed or load current amount in order to change effective exciting turn ratio of series winding and further change the operating charactertistics of series motor under respective states, and its closed-loop type primary circuit comprising:
at least one DC series motor consisted of multi-tap series field winding S101 and armature A101 or further a compound motor having shunt winding F101;
at least one selective and alternative switch device SW101 consisted of analogical or digital signal processing circuit and electro-mechanical or solid-state switch element, including a common pin leading to the power supply and each tap leading to the series field winding S101 for the control with eccentric force; or control by analogical or digital signal detector SD101 according to the change in motor rotational speed or control by analogical or digital type detector ID101 according to motor load current or control by armature EMF detector EMFD101 in order to enable the selective and alternative switch device SW1 01 to alternate the motor; when the load is lower and current smaller, effective exciting turn ratio of series field winding S101 becomes higher; on the contrary when the load is higher and current rising up, the selective and alternative switch device SW101 will switch to the low effective exciting turn ratio;
the circuit may further include power supply voltage detector VD101 for measuring voltage value of power supply in order to correct the control command of selective and alternative switch device and such correction value may include the higher voltage is the selective and alternative switch device inclines to increase turn ratio of effective exciting series field winding, and such inclination combines the said motor load current or rotational speed value to form a parameter for t he selective and alternative switch device;
operating input device OP1 01 consisted of manual or out-connected signal interface for input relevant data to selective and alternative switch device.

2. The series (or compound) motor and circuit for adjusting effective exciting turn ratio of series field winding according to rotational speed or load current as claimed in claim 1, may include some operating interface subject to the actual requirement, and its function including:
(1) Manual selective/alternative switch device to change effective exciting winding turn ratio of series field.
(2) Eccentric force selective/alternative switch device to change effective exciting winding turn ratio of series field.
(3) Motor rotational speed detector SD1 01 for operating the selective/alternative switch device to change effective exciting winding turn ratio of series field.
(4) Load current detector ID101 for operating the selective/ alternative switch device to change effective exciting winding turn ratio of series field.
(5) Armature EMF detector EMF101 for operating the selective /alternative switch device to change effective exciting winding turn ratio of series field.
(6) Power supply voltage detector for operating the selective/alternative switch device to change effective exciting winding turn ratio of series field.
(7) A combination of Item (1) and (2) for operating the selective/alternative switch device to change effective exciting winding turn ratio of series field.
(8) A combination of Item (1) and (4) for operating the selective/alternative switch device to change effective exciting winding turn ratio of series field.
(9) A combination of Item (1) and (5) for operating the selective/alternative switch device to change effective exciting winding turn ratio of series field.
(10) A combination of Item (1), (3), (6) for operating the selective/alternative switch device to change effective exciting winding turn ratio of series field.
(11) A combination of Item (1), (4), (6) for operating the selective/alternative switch device to change effective exciting winding turn ratio of series field.
(12) A combination of Item (1), (5), (6) for operating the selective/alternative switch device to change effective exciting winding turn ratio of series field.
(13) A combination of Item (1), (5), (6) for operating the selective/alternative switch device to change effective exciting winding turn ratio of series field.
(14) A combination of Item (4) and (6) for operating the selective/alternative switch device to change effective exciting winding turn ratio of series field.
(15) A combination of Item (5) and (6) for operating the selective/alternative switch device to change effective exciting winding turn ratio of series field.
(16) A combination of Item (1), (3), (4) for operating the selective/alternative switch device to change effective exciting winding turn ratio of series field.
(17) A combination of Item (1), (3), (5) for operating the selective/alternative switch device to change effective exciting winding turn ratio of series field.
(18) A combination of Item (1), (4), (5) for operating the selective/alternative switch device to change effective exciting winding turn ratio of series field.
(19) A combination of Item (3) and (4) for operating the selective/alternative switch device to change effective exciting winding turn ratio of series field.
(20) A combination of Item (3) and (5) for operating the selective/alternative switch device to change effective exciting winding turn ratio of series field.
(21) A combination of Item (4) and (5) for operating the selective/alternative switch device to change effective exciting winding turn ratio of series field.
